Europäisches Patentamt

**European Patent Office**

Office européen des brevets

(11) Publication number: **0 040 191**

**B1**

(12) **EUROPEAN PATENT SPECIFICATION**

(45) Date of publication of patent specification: **11.06.86**

(51) Int. Cl.⁴: **G 01 C 23/00**

(21) Application number: **80900121.7**

(22) Date of filing: **19.11.79**

(86) International application number:
**PCT/US79/01023**

(87) International publication number:
**WO 81/01461 28.05.81 Gazette 81/13**

(54) **MULTIPLE SENSING DEVICE.**

(43) Date of publication of application:
**25.11.81 Bulletin 81/47**

(45) Publication of the grant of the patent:
**11.06.86 Bulletin 86/24**

(84) Designated Contracting States:
**DE FR GB SE**

(56) References cited:
**DE-A-2 705 009**
**US-A-1 859 005**
**US-A-2 638 556**
**US-A-2 716 893**
**US-A-2 726 074**
**US-A-3 071 975**
**US-A-3 142 991**
**US-A-3 273 397**
**US-A-3 458 805**

(73) Proprietor: **APPLIED DEVICES CORPORATION**
**c/o 431 Seabreeze Avenue**
**Palm Beach Florida 33480 (US)**

(72) Inventor: **PITTMAN, Roland**
**511 Oak Haven Drive**
**Altamonta Springs, FL 32701 (US)**

(74) Representative: **Marsh, Roy David et al**
**Brewer & Son 5-9, Quality Court Chancery Lane**
**London WC2A 1HT (GB)**

Courier Press, Leamington Spa, England.

## Description

### Background of the Invention

This invention relates to sensing devices for physical characteristics, and is more particularly directed to a low cost sensing device for sensing angular velocity and linear acceleration and, optionally, such further parameters as magnetic field, electric field and gas flow. The invention is particularly directed to simplified devices or combination of devices of this type, which are particularly adaptable for use in aircraft. It will, of course, be apparent that the invention may be advantageously employed in other fields.

United States Patent Specification US—A—2716893 describes an angular velocity sensing device assembly comprising a rotatable shaft and a plurality of piezoelectric sensing means mounted in a common plane for rotation with said shaft for producing an output voltage representative of an angular velocity of the sensing device.

United States Patent Specification US—A—3142991 describes an assembly in which a shaft-mounted piezoelectric means is indirectly responsive to linear acceleration of the housing of the shaft. The housing contains two liquids of different density separated by a diaphragm in a plane which is perpendicular to the rotation axis of the shaft. Linear acceleration of the housing in a direction perpendicular to the shaft creates a pendulum effect in the liquids which is used to deflect the diaphragm. It is the magnitude of the deflection of the diaphragm, as measured by the piezoelectric sensing means, which is used to indicate the linear acceleration.

While devices (see also, for example, US—A—3273397, US—A—1859005 and US—A—3458805) are known for the detection of individual ones of the above-mentioned parameters, in general the devices are relatively expensive, so that their use is restricted, and they are not adaptable to application having limited life.

More specifically, the linear acceleration measuring device of US—A—3142991 has features inherent in it which make it a relatively expensive device. A reliable diaphragm is vital, and so is a method of assembly which avoids mixing of liquids and incomplete filling of the volumes each side of the diaphragm. The present invention is seen as a solution to the problem of providing a reliable means of measuring angular velocity and linear acceleration which is less costly to manufacture and use than the prior proposals.

According to the present invention there is provided a piezoelectric sensing device comprising i) a first sensing means mounted on a shaft and responsive to an angular velocity of the shaft about an axis perpendicular to the axis of rotation of the shaft, the sensing means comprising a limb which extends radially from the shaft and has a piezoelectric strain-sensing means arranged to generate a voltage signal indicative of the magnitude of a bending strain within the limb and about a bending axis perpendicular to the axis of rotation of the shaft and to the radial direction along the said limb, and ii) electrical pick-off contacts for conduction away from the shaft of first electrical output signals from the first sensing means, characterised in that the device further comprises iii) second sensing means mounted on said shaft and responsive to a linear acceleration of the shaft in a direction perpendicular to the axis of rotation of the shaft, the electrical pick-off contacts conducting away from the shaft also second electrical output signals from the second sensing means and in that the second sensing means comprises a limb which extends radially from said shaft and is arranged such that during said acceleration it undergoes a strain which is caused by the inertial effect of its mass and is proportional to said acceleration, and the limb of said second sensing means has a piezoelectric strain-sensing means arranged to sense said strain and to generate a voltage signal indicative of the magnitude of said strain.

The device according to the present invention has a single shaft and a simple arrangement of piezoelectric devices mounted on it. Such an arrangement gives a prospect of improved reliability and reduced cost relative to the prior art devices.

In one embodiment of the invention, commutator means are employed to enable coupling of the sensed voltage from the sensing devices. The sensing devices are adapted to produce alternating voltage signals, the instantaneous maximum amplitudes of the signals corresponding generally to the vector of the measured physical characteristic in a given plane, such as a plane normal to the axis of rotation. As a consequence, substantially complete data regarding the physical characteristics may be provided by employing two of the sensing devices according to the invention, one in each of two mutually perpendicular rotational axes.

Embodiments of the invention may include a magnetic field sensing device mounted on the same shaft, for determining a magnetic field vector normal to the shaft, which may comprise a pair of magnetic coils symmetrically affixed to rotate with the shaft. A sensing device for ascertaining the vector of an external electric field can also be mounted on the same shaft, and may comprise a pair of electrodes mounted for rotation with the shaft, with the external ends of the electrodes being uninsulated. Gas flow, such as air flow, in a direction normal to the axis of the shaft may be detected by a crystal plate mounted, preferably on the end of the shaft, this crystal being bendable about an axis parallel to the plate and normal to the shaft. The first sensing means, for sensing angular acceleration about axes normal to the shaft, may be a pair of crystals extending radially from the shaft, and having bending axes normal to the shaft. The radially outer extremities of the latter crystals may be joined by a symmetrical, i.e. annular, reaction mass. In addition, the second sensing means, for sensing linear acceleration normal to the shaft may be a pair of similar crystals compressible in a direction normal to the axis of the shaft. Masses may also be provided at the radial outer extremities of these crystals.

Brief Description of the Drawings

In order that the invention will be more clearly understood, it will now be disclosed in greater detail with reference to the accompanying drawings, in which:

Figs. 1—5 are simplified illustrations of magnetic field, electric field, gas flow, linear acceleration and angular rate sensing devices employed in accordance with the invention;

Figs. 6A—6D are views illustrating, in simplified form four consecutive positions of the sensing rotor of Fig. 5;

Figs. 7A—7D are figures illustrating, consecutively, the side views corresponding to the views of Figs. 6A—6D, respectively;

Fig. 8 illustrates the output of the two crystals of Figs. 6A—6D and 7A—7D;

Fig. 9 illustrates the sum of the voltages generated as illustrated in Fig. 8;

Fig. 10 is an exploded cross-sectional view of a portion of a multi-probe assembly in accordance with a preferred embodiment of the invention;

Fig. 11 is a cross-sectional view of an electric motor rotor that may be employed in combination with the system of Fig. 10;

Fig. 12 is a cross-sectional view of a multi-probe assembly, incorporating the elements of Fig. 10;

Fig. 13 is a cross-sectional view of a further embodiment of a multi-probe assembly, in accordance with the invention;.and

Fig. 14 is a simplified illustration of one application of a pair of multi-probe assemblies in accordance with the invention, on an aircraft.

Description of the Preferred Embodiments

The present invention is directed to the provision of a multiple sensing device, particularly adaptable for use on aircraft, but which may of course have other applications. The concept of a multiple sensing device for physical parameters necessitates the combination of individual sensing purposes, in an accessible manner, in order to achieve the desired end result, and hence the present invention of necessity incorporates a member of individual sensing elements responsive to different physical characteristics. The individual sensing devices may, of course, have separate utility, even though they are particularly adaptable to being combined for the desired purpose.

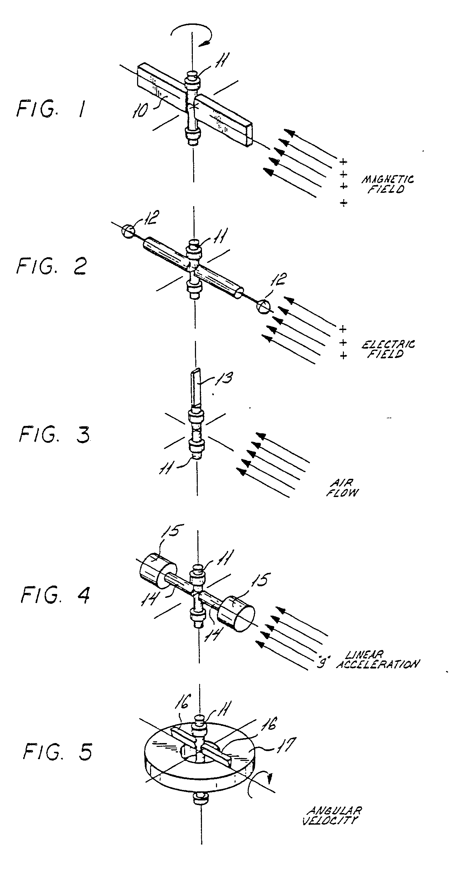

Referring now to the drawings, Figs. 1—5 illustrate in simplified form the principles of operation of the five sensing devices with which the present invention is primarily concerned. It will, of course, be apparent that a multiple sensing device in accordance with the invention may additionally incorporate other sensing means. The gas flow sensing device described below is the subject of divisional European Patent Application No. 83201366.8 published as EP—A—0108433.

Referring first to Fig. 1, a magnetic field sensing device is comprised of a pair of identical coils 10 mounted in a column plane on opposite sides of a shaft 11, for rotation with the shaft. Assuming the shaft extends into the coordinate direction Z and that the coils are connected externally by way of a suitable commutator, the device of Fig. 1 will produce an alternating voltage of a frequency corresponding to the rotary speed of this shaft, and having an instantaneous peak when the axis of the coils is aligned with an external magnetic field, such as the earth's magnetic field. The magnitude of the output voltage is dependent upon the component of the external magnetic field in the X/Y plane. In the arrangement of Fig. 1, it is apparent that the greatest portion of the output voltage is developed by the radially outermost portions of the coils.

The output voltage is a sine wave when the field is linear. When the incident magnetic field is not linear; i.e., contains gradients, harmonics of the fundamental are generated. In the simple case, the second harmonic is the most dominant. In effect, the main field and the gradient fields give uniquely different signal frequencies.

In the electric field sensor illustrated in Fig. 2, a pair of electrodes 12 extend radially in opposite directions from the shaft 11, with the radially outermost portions of the electrodes being uninsulated. The radially intermediate portions of the electrodes are preferably insulated. It is apparent that, with the inner ends of the electrodes connected externally of the device by way of a suitable commutator, the device will produce a sine wave voltage output of a frequency corresponding to the rate of rotation of the shaft 11. The voltage arises from the fact that the non-insulated radially outer ends of the electrodes 12 rotate in a static electric field, such as the static electric field of the earth, whereby the instantaneous maximum of the sine wave voltage output occurs when the electrodes are aligned with this electric field. The amplitude of the voltage corresponds to the component of the static electric field in the X/Y plane.

In the sensing device of Fig. 3, a plane piezoelectric crystal 13 is mounted on one end of the shaft 11 for rotation therewith. The plane of the crystal 13 is parallel to the axis of the shaft 11, and the crystal is arranged so that it may be bent about axes normal to the axis of the shaft 11. Suitable electrodes of conventional nature (not shown) are affixed to the crystal, so that stress upon the crystal normal to the shaft 11 results in the generation of a piezoelectric voltage, which may be directed externally of the device by a suitable commutator assembly. If a component of a gas flow is in the X/Y plane of the device, it is apparent that the gas flow, impinging upon the crystal, will stress the crystal so that an alternating voltage will have a frequency corresponding to the rate of rotation of the shaft 11 with the instantaneous peaks occurring when the bending axis of the crystal is normal to the component of the gas direction in the X/Y plane. The crystal may be referred to as a "bender" crystal. The amplitude of the voltage corresponds to the component of the gas flow in the X/Y plane, assuming, as above, that the shaft extends in the Z direction. In the arrangement of Fig. 3, the crystal thus serves as a restoring spring and a signal generator, and may be advantageously employed as an air mass data probe.

In Fig. 4, a pair of crystals 14 are mounted on opposite sides of the shaft 11, for rotation therewith. The crystals 14 are alternately extended and compressed in a direction normal to the shaft 11 by a linear acceleration as shown. If desired, suitable masses 15 may be provided at the radially outer extremities of the crystals 14. If suitable leads are connected conventionally to the crystals 14, and directed externally of the device by way of a suitable commutator assembly, it is apparent that an alternating output voltage will be produced having a frequency corresponding to the rate of rotation of the shaft. The instantaneous maximum of the voltage occurs when the crystals are aligned with a component of linear acceleration in the X/Y plane, and the amplitude of the output voltage thus corresponds to the linear acceleration of the shaft in the X/Y direction. The sensitive axes of the crystals are thus oriented to react to acceleration parallel to the spin plane of the device. The two crystals are electrically interconnected in order to provide an additive output for these two elements.

In Fig. 5, two crystals 16 are also mounted on opposite sides of the shaft 11. In the arrangement of Fig. 5, however, the crystals are mounted so as to bend in the presence of an angular velocity as shown, having bending axes normal to the axis of the shaft. If desired, a reaction mass such an annular mass 17 may be provided symmetrically at the radially outer ends of the crystals. The arrangement of Fig. 5 constitutes an angular velocity probe, based upon the gyroscopic operation of an elastically restrained body rotating at high velocity. The initial member and the restoring springs thus constitute the same element, as in the case of the air mass data probe of Fig. 3 and the linear acceleration probe of Fig. 4. The two bending crystals are arranged in a dipole fashion for common mode rejection and inertial balance. In the arrangement of Fig. 5, annular momentum of the masses reacting as a result of applied angular velocities at right angles to the spin axis of shaft 11, results in the generation of a voltage by the crystals which is sinusoidal in distribution and exhibits a frequency identical to the rate of rotation of the shaft. The two crystals of the arrangement of Fig. 5, are preferably interconnected to their respective commutators in the opposite sense from that of the device of Fig. 4.

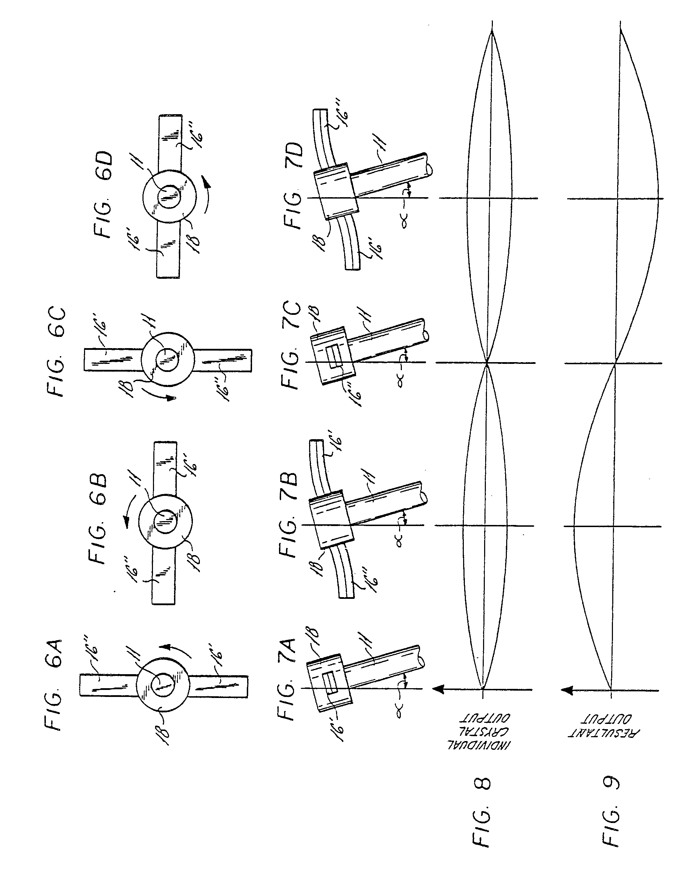

The operation of the rate gyro of Fig. 5 may be more readily understood with reference to Figs. 6—9. Thus Figs. 6A—6D represent four consecutive positions of the crystals, with counterclockwise revolution, as may be seen from the end of the shaft 11. In these figures, the two crystals are identified as crystals 16' and 16''. The shaft is assumed to be continuously rotating. Referring to Fig. 7, which depicts a side view of the device of Fig. 6, it is assumed that the axis of the shaft 11 has been displaced through an angle alpha. The shaft 11 and the hub 18 on the shaft in which the crystals 16' and 16'' are mounted, are adequately rigid so that they both may substantially instantaneously exhibit their new positions without deformation. The radially outer ends of the crystals, however, due to gyroscopic action, remain for some time oriented as though the angular displacement of the shaft 11 had not occurred. This is, of course, particularly true if a reaction mass is linked to the radially outer ends of the crystals. As a consequence of the gyroscopic action, the crystals bend about their mechanical axes, as illustrated in Figs. 7A—7D, respectively, to result in output voltages as illustrated in Fig. 8. It is thus seen that the instantaneous peaks of the resultant alternating voltage occur when the crystals extend normal to the axis of rotation about the angle alpha. Since the outputs of the crystals are of different polarity, the crystals are interconnected in reverse senses, to produce the resultant output voltage as illustrated in Fig. 9.

In the arrangement of Figs. 5—9, it is apparent that the crystals are employed as gyroscopic elements, with or without the provision of a reaction mass, and that the strain on the crystals is proportional to input angular rate. The amplitude of the output is proportional to the input angular rate, and the phase of the output is related to the direction of the input angular displacement of the rotating shaft. In other words, if the shaft 11 is angularly displaced about an axis in the X/Y plane, the output of the rate gyro or angular velocity sensor of Fig. 5 is proportional to the rate of rotation about the axis in the X/Y plane, then the phase of the output voltage is related to the orientation of the axis of rotation in the X/Y plane, assuming again that the shaft 11 extends in the Z direction.

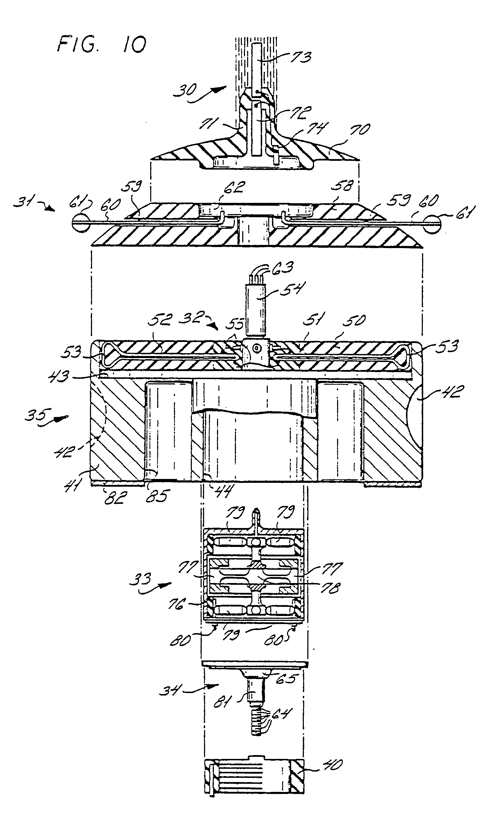

Fig. 10 is an exploded partially cross-sectional view of a portion of a multi-probe assembly in accordance with a preferred embodiment of the invention. This view illustrates primarily the rotor components, to show that they can be of modular construction, whereby a multi-probe assembly may be fabricated of any of the desired sensing probes. It will, of course, be apparent that the cover construction for such a multi-probe assembly will be dependent upon the components chosen for use in the assembly.

As illustrated in Fig. 10, the multi-probe assembly is comprised of an air data probe 30, an electric field probe 31, a magnetic field probe 32, an angular velocity and linear acceleration probe 33, and a slip ring 34 and brush block assembly 40. In addition, the assembly includes a gas drive ring 35 for the pneumatic drive of the rotor. All of the elements of Fig. 10, except the brush block assembly 40, constitutes a part of the rotor.

The gas drive assembly 35 may be comprised of a metallic ring 41 having gas drive slots 42 on its radially outer periphery, whereby the ring may be rotated by directing a jet of air tangentially against this outer periphery. The ring 41 has a recess 43 in one face thereof, for receiving the magnetic field probe 32. In addition, a circular coaxial recess 44 is provided on the other face for receiving the angular velocity and linear acceleration probe 33.

The magnetic field probe is comprised of a circular disc 50 of insulating material, within which the two magnetic sensing coils 51 and 52 are embedded. The coils 51 and 52 have radially outer extremities 53 which extend axially of the disc for substantially its full axial dimension. The coils 51 and 52, which are identical, have radial returns squashed axially, as illustrated in Fig. 10, with the axial extension of the radial innermost portions of the coil being at a minimum. As a consequence, the radial returns are so positioned with respect to the spin axis of the device that the axial return is near the centre of rotation. This in effect gives the section line at the major radius most of the charge generating capacity for the probe. The disc 50 is fitted, by suitable conventional means, for rotation on a shaft 54. The shaft 54 is preferably hollow, and serves as a bearing for the assembly, to extend through a housing (not shown in Fig. 10). Suitable interconnecting wires for the coils 51 and 52, as well as for interconnecting the coils to the slip ring assembly, are illustrated at 55.

The shaft 54 may be affixed only to the magnetic sensing assembly, with the ring 50 being fitted tightly for rotation in the recess 43. Alternatively, the shaft 54 may extend through the ring 50 and be fitted to the gas drive ring 41.

The electric field probe 31 and the air data probe 30 must be located outside of the housing of the device in order to sense the external electric fields. Consequently, the electric field probe may be comprised of an insulating disc 58 having a central bore adapted to fit over the shaft 54. The disc 58 may be connected to the shaft 54 for rotation by any conventional means. The disc 58 has a pair of radially extending holes 59 through which the electrodes 60 extend. Suitable enlarged ends, such as conductive balls 61, may be provided at the ends of the electrodes 60 for sensing the earth's statis electrical field. The inner ends of the electrodes 60 extend into a recess 62 in the face of the disc 58, for interconnection with conductors 63 advantageously extending completely through the device for interconnection with the slip rings 64 of the slip ring assembly 65.

As will be apparent from the following disclosure, a portion of the housing of the device may extend between the magnetic field probe and the electric field probe.

The air data probe is also comprised of an electrically insulating rotating body member 70 having a disc shaped base adapted to fit for rotation either into the recess 62 of the electric field probe or, if desired, directly on the end of the shaft 54. The body 70 may be an axial extension 71 for enclosing a crystal 72. A further crystal 73 extends axially beyond the insulating body 70, to serve as the air flow sensor as above described. The crystal 72 within the extension 71 serves as a reference, and is thereby interconnected differentially with the crystal 73. The conductor connected to those crystals may be led to a connector 74 affixed in the base 70, for interconnection with the slip ring conductors 63.

The angular velocity and linear acceleration probe may form a combined unit 33, as illustrated in Fig. 10. For this purpose, the assembly may be comprised of a cylindrical housing 76 adapted to be fitted for rotation in the recess 44 of the gas drive ring. The housing 76 may contain a pair of radially extending crystals 77 at a central portion, extending to a hub 78, to serve as the linear acceleration probe as discussed in accordance with the above principles. The linear acceleration probe is disposed axially centrally of the device 33. In addition, a plurality of pairs of bender crystals 79 may be positioned axially on each side of the linear acceleration probe, for the sensing of angular velocity as discussed above. Suitable conventional conductors are provided (but this is not shown) connected to the crystals, for interconnection with the slip ring assembly 65.

The slip ring assembly 65 may be fitted directly to the lower end of the assembly 33, for example, on studs 80 on the lower end of the assembly 33, in order to complete the rotary structure of the device. The slip ring assembly has a plurality of slip rings 64, adapted to be connected to each of the sensing probes as above discussed. While the drawing of Fig. 10 does not show these conductors, it is apparent that suitable apertures may be provided in the housings of the structure, for enabling the necessary interconnections. For this purpose, it is of course not necessary that a single shaft extend throughout the rotor assembly, since the individual components of the structure may be provided with internally embedded conductors for this purpose. As a consequence, it is apparent that a modular construction may be achieved, whereby the elements may be interconnected as desired.

While the brush block 40 for cooperation with the slip ring assembly 34 is not a rotary member, it has been illustrated in simplified form in Fig. 10, to illustrate in general a preferred manner by which the signals generated in the various probes may be led externally of the device. The slip rings 64 may be at the axial end of the slip ring assembly, axially beyond a bearing portion 81 of the rotor assembly, in order to simplify constructions of the device.

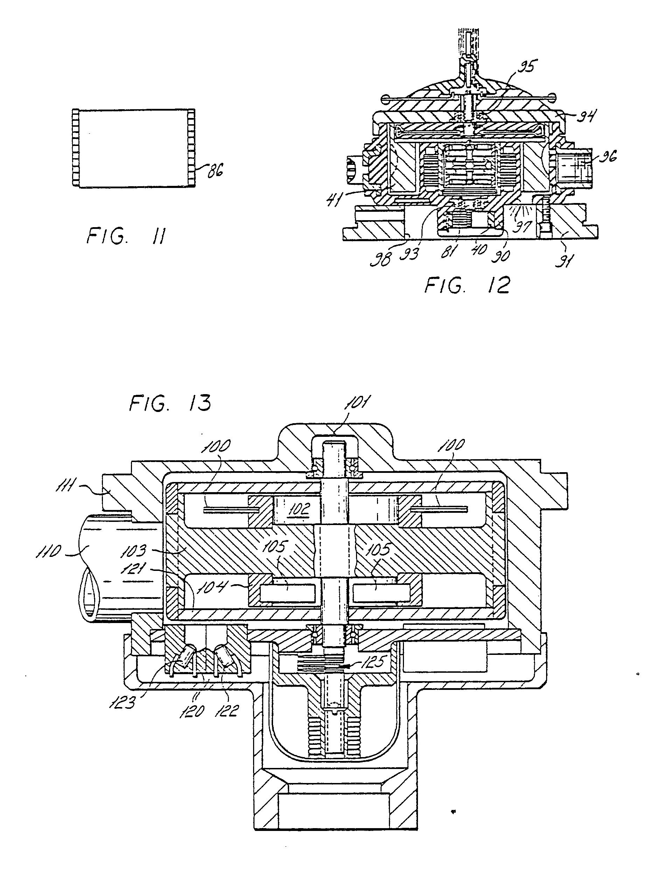

In the use of the device in accordance with the invention, it is, of course, necessary to establish the phases of the different alternating voltages generated by the sensing devices, in order to be able to ascertain the directions of the various sensed physical quantities. For this purpose, in accordance with one embodiment of the invention, reference markings 82 may be provided on one face of the gas drive ring 41, for cooperation with a suitable sensing device, such as a photoelectric sensing device 123 of conventional nature as illustrated in Fig. 13. It will, of course, be apparent that any other forms of reference generated of conventional nature may alternatively be employed in combination with the multi-probe device of Fig. 10.

While the device of Fig. 10 is particularly adaptable for gas drive, it will be apparent that it may also be employed with an electric motor drive. For this purpose, the gas drive ring 41 is provided with an annular recess 85 radially outwardly of the recess 44. A motor rotor 86 for example as illustrated in Fig. 11, may be mounted in the recess 85, for rotation with the rotor assembly of the sensing device. The recess 85 has a sufficient radial dimension that a stator assembly affixed to the housing (not shown in Fig. 10) may also be fitted into recess 85. For example, the stator may extend axially from the end housing of the assembly. It is, therefore, apparent that the device of Fig. 10 may be modified for electric drive with a minimum of modification.

Fig. 12 shows the assembly of Fig. 10 in cross-section, with the elements of the rotor interconnected together in their preferred form. In addition, it shows the brush block assembly 40 mounted in a recess in insulating housing 90 for cooperation with a slip ring assembly. The housing member 90 serves as one cover of the device, and is bolted to a metal base block 91, for example, to enable the rigid mounting of the device as desired. In addition, the central portion of the housing 92 is affixed to the base 91. The housing 90 is provided with suitable bearings 93, to engage the portion 81 of the shaft of the rotor. The upper portion 94 of the housing, which serves as a cover, extends between the magnetic and electric field sensor, and is provided with bearings 95 for the shaft portion 54. The portions 92 and 94 of the housing may also be of insulating material.

As discussed above, the multi-probe sensor in accordance with the invention may be formed of a lesser number of components. Thus, as illustrated in Fig. 13, the multi-probe sensor is comprised of a rotary unit incorporating only a pair of bender crystals 100 mounted for rotation with a shaft 101. The crystals 100, as is apparent in Fig. 13, do not extend inwardly to the shaft, their bases being fixed in a suitable block or hub 102 radially outwardly spaced from the shaft 101 proper. In the arrangement of Fig. 13, the hub or blocks 102 are affixed to one side of a web of the gas drive ring 103, and a further hub or set-up blocks 104 is provided on the other side of the web. From these blocks or hub, a pair of additional bender crystals 105 are provided extending radially inwardly. The inner ends of these latter crystals are not rigidly affixed to any component of the structure. The crystals 105 are mounted so that they are bendable about axes parallel to the shaft 101. As a consequence, the output of the crystals 100 corresponds to angular velocity and the output of crystals 105 corresponds to linear acceleration.

A gas inlet 110 is provided on the housing 111 for driving the shaft 101. In addition, the reference generator 120, discussed above, is mounted in the housing 111 for cooperation with the suitable reference scale 121 on a face of the gas drive ring 103. The reference generator may comprise a reference source of light 122, such as an LED, cooperating with a suitable photosensitive device 123 of conventional nature, for producing a reference signal output related to the position of the rotor of the device. The device of Fig. 13 is provided with a suitable slip ring and brush assembly 125.

It will of course be apparent that other combinations of units may be employed, in accordance with the invention.

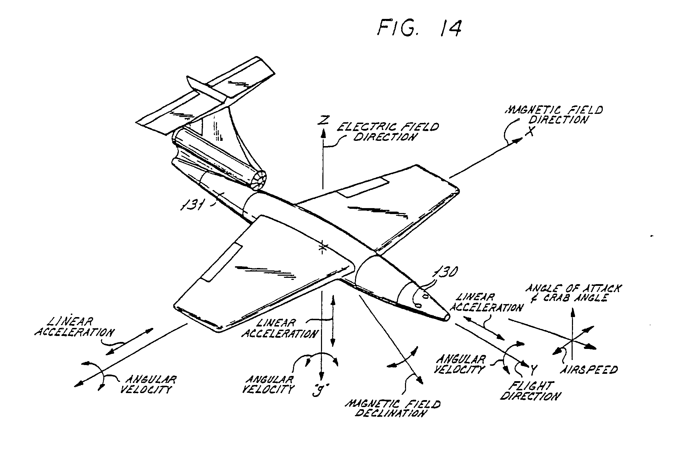

Since the multi-probe sensor in accordance with the invention provides two axis data, a pair of such multi-probe assemblies may be employed to provide all the necessary three-dimensional data with respect to the measured physical quantity. This is particularly useful, for example, in aircraft. Thus, as illustrated in Fig. 14, a pair of multi-probe devices 130 of the type illustrated in Figs. 10 and 12 may be mounted with orthogonal axes on an aircraft 131. This arrangement enables the inputting of sufficient data to the aircraft to enable the calculation of the earth's magnetic and electric field, as well as external air flow and linear acceleration and angular velocity of the aircraft. The probe assembly is inexpensive, and readily fabricated.

It is of course apparent that the electric circuits for comparison of the phase of the reference generator with the measured quantity may be of conventional nature, and hence need not be discussed in detail in this specification.

Typical performance characteristics of a multi-probe assembly, in accordance with the invention, are provided in Table I which accompanies this description.

It is further apparent that this multi-probe assembly, in accordance with the invention, by employing a single rotary shaft, reduces cost and power consumption in the provision of needs for sensing the necessary data, as well as a decrease in volume and mechanical complexity by an order of magnitude. Further, it is apparent that the majority of components of the structure may be formed of molded plastic.

TABLE 1

| Parameters | I X/Y Axis Mag | II "Z" Axis Mag | III X/Y Axis Elec | IV Air Speed | V Air Speed | VI X/Y Ang. Vel. | VII X/Y Lin. Accel. |
|---|---|---|---|---|---|---|---|
| Scale Factor (V.D.C.) | 5.V/GS | 5.V/GS | .017V/V/Mtr | .010V/Mph | .165V/Deg | .017V/Deg/Sec | .250V/"g" |
| Bias (Total Vector) | <.002 GS | <.01 GS | <3.V/Mtr | <2.Mph | <.5° | <.02°/sec | <.002 "g" |
| Null Uncert. (Hr to Hr) | <.0005 GS RMS | <.0005 GS RMS | <.5 V/Mtr RMS | <.3 Mph RMS | <.1° RMS | <.003°/sec RMS | <.0005 "g" RMS |
| Null Uncert. (Trn on to Trn on) | <.0008 GS PP | <.0005 GS PP | <1. V/Mtr PP | <.5 Mph PP | <.25° PP | <.008°/sec PP | .0008 "g" PP |
| Null Uncert. (Spin vel.) (Var. ±10%) | <.001 GS PP | <.0005 GS PP | <1. V/Mtr PP | <2. Mph PP | <.30° PP | <.01°/sec PP | <.002 "g" PP |
| Linear Operating Range | 1.0 GS | 1.0 GS | 300. V/Mtr | 500. Mph | ±30.° | 300°/sec | 20 "g" |
| Max. Overrange Input | 5.0 GS | 5.0 GS | 1000. V/Mtr | 1000. Mph | ±180° | 1200°/sec | 100 "g" |
| Linearity (% Devia. FR) (Nom. S.F.) | <1.% | <1.% | <2.% | <2.% | <1.5% | <1.% | <.5% |
| Symmetry (Slope Agreement) | <1.% | <1.% | <2.% | — | <1.5% | <1.% | <.5% |
| Cross Axis Coupling | <2.% | — | <2.% | By the cos. of airflow | By the amplitude of airspeed | <2.% | <.5% |
| Cross Quantity Alignment | <±.5° | <±.5° | <±.5° | <±.5° | <±.5° | <±.25° | 0° (Ref.) |
| Cross Quantity Coupling I. X/Y Axis Mag Field | 100% | — | Negl. | Negl. | Negl. | Negl. | Negl. |
| II. "Z" Axis Mag Field | — | 100% | " | " | " | " | " |
| III. X/Y Axis Elec Field | Negl. | Negl. | 100% | " | " | " | " |
| IV. X/Y Air Speed | " | " | .001 V/Mtr/Mph | 100% | — | " | " |
| V. Angle of air flow | " | " | Negl. | — | 100% | " | " |
| VI. X/Y Axis Ang Vel. | " | " | " | Negl. | Negl. | 100% | <.00005 "g"/Dec/Sec |
| VII. X/Y Axis Lin Accel. | " | " | " | <.02 Mph/"g" | <.05°/"g" | <.0002°/sec/"g" | 100% |

0 040 191

## Claims

1. A piezoelectric sensing device comprising i) a first sensing means (16; 79) mounted on a shaft (11; 54) and responsive to an angular velocity of the shaft about an axis perpendicular to the axis of rotation of the shaft, the sensing means comprising a limb (16) which extends radially from the shaft and has a piezoelectric strain-sensing means (79) arranged to generate a voltage signal indicative of the magnitude of a bending strain within the limb and about a bending axis perpendicular to the axis of rotation of the shaft and to the radial direction along the said limb, and ii) electrical pick-off contacts (64) for conduction away from the shaft of first electrical output signals from the first sensing means (16; 79), characterised in that the device further comprises iii) second sensing means (14; 77) mounted on said shaft (11; 54) and responsive to a linear acceleration of the shaft in a direction perpendicular to the axis of rotation of the shaft, the electrical pick-off contacts (64) conducting away from the shaft also second electrical output signals from the second sensing means and in that the second sensing means comprises a limb (14) which extends radially from said shaft and is arranged such that during said acceleration it undergoes a strain which is caused by the inertial effects of its mass and is proportional to said acceleration, and the limb of said second sensing means has a piezoelectric strain-sensing means (77) arranged to sense said strain and to generate a voltage signal indicative of the magnitude of said strain.

2. A sensing device as claimed in claim 1, characterised in that said first (79) and second (77) sensing means are in axially spaced apart relationship along said shaft (54).

3. A device as claimed in either of the preceding claims, characterised in that the piezoelectric sensing means of the said second (77) sensing device is formed as a pair of diametrically opposed crystals having surfaces lying in planes parallel to the shaft (54) axis.

4. A device as claimed in any one of the preceding claims, characterised by an electric field sensing device (31) mounted on the shaft (54) to rotate with the shaft, for sensing electric fields in plane perpendicular to the rotational axis of the shaft.

5. A device as claimed in any one of the preceding claims, characterised by a magnetic field sensing device (32) mounted on the shaft (54) to rotate with the shaft, for sensing magnetic fields in planes perpendicular to the rotational axis of the shaft.

6. A device as claimed in any one of the preceding claims, characterised by third sensing means (30) mounted on said shaft (54) for producing an output voltage responsive to a flow of gas over said device, said third sensing means being responsive primarily to such component of said gas flow as is in a plane normal to said shaft, said third sensing means (30) comprising a piezoelectric crystal (73), said crystal being in the form of a plate cantilevered from an end of said shaft and bendable about an axis perpendicular to said shaft, the plane of said plate being parallel to the axis of said shaft.

7. A device as claimed in any one of the preceding claims, characterised by a drive wheel (41) mounted on said shaft (54), and pneumatic drive means for directing a driving fluid against said drive wheel.

8. A device as claimed in claim 7, characterised in that said drive wheel has recesses (44) arranged coaxially with said shaft (54) for receiving said first (79) and second (77) sensing means.

## Patentansprüche

1. Piezoelektrische Meßwertaufnahmevorrichtung

i) mit einem ersten auf einer Welle (11, 54) befestigten Meßwertaufnehmer (16, 79), der auf eine Winkelgeschwindigkeit der Welle um einem Achse rechtwinklig zu der Drehachse der Welle anspricht und der ein radial von der Welle sich wegerstreckendes Glied (16) sowie piezoelektrische Verformungsmeßmittel (79) aufweist, die dazu dienen, ein Spannungssignal zu erzeugen, das die Größe einer Biegeverformung in dem Glied und um eine zu der Drehachse der Welle sowie der Radialerstreckung längs des Gliedes rechtwinkligen Achse anzeigt, und

ii) mit elektrischen Aufnehmerkontakten (64) zur Ableitung der ersten elektrischen Signale des ersten Meßwertaufnehmers (16, 79) von der Welle,

dadurch gekennzeichnet, daß das Meßwertaufnahmegerät

iii) einen zweiten auf der Welle (11, 54) befestigten Meßwertaufnehmer (16, 79) aufweist, der auf eine geradlinige Beschleunigung der Welle in Richtung rechtwinklig zu der Drehachse der Welle anspricht, wobei die elektrischen Aufnehmerkontakte (64) ebenfalls die zweiten Ausgangssignale des zweiten Meßwertaufnehmers von der Welle ableiten, daß der zweite Meßwertaufnehmer ein sich radial von der Welle weg erstreckendes Glied (14) aufweist, das derart angeordnet ist, daß es während der Beschleunigung eine Verformung erleidet, die durch den Trägheitseffekt seiner Masse hervorgerufen ist und der Beschleunigung proportional ist, un daß das Glied des zweiten Meßwertaufnehmers piezoelektrische Verformungsmeßmittel (77) enthält, die dazu dienen, die Verformung zu messen und ein Spannungssignal zu erzeugen, das die Größe der Verformung anzeigt.

2. Meßwertaufnahmegerät nach Anspruch 1, dadurch gekennzeichnet, daß der erste (79) und der zweite (77) Meßwertaufnehmer längs der Welle (54) mit axialem Abstand angeordnet sind.

3. Meßwertaufnahmegerät nach einem der vorhergehenden Ansprüche, dadurch gekennzeichnet, daß die piezoelektrischen Verformungsmeßmittel des zweiten Meßwertaufnehmers (77) als ein Paar von diametral gegenüberliegenden Kristallen ausgebildet ist, die Oberflächen aufweisen, die in zu der Achse der Welle (54) parallelen Ebenen liegen.

4. Meßwertaufnahmegerät nach einem der vorhergehenden Ansprüche, dadurch gekennzeichnet, daß auf der Welle (54) ein mit der Welle umlaufender Meßwertaufnehmer (31) für ein elektrisches Feld befestigt ist, der elektrische Felder in einer zu der Drehachse der Welle rechtwinkligen Ebene erfaßt.

5. Meßwertaufnahmegerät nach einem der vorhergehenden Ansprüche, dadurch gekennzeichnet, daß auf der Welle (54) ein mit der Welle umlaufender Meßwertaufnehmer (32) für ein Magnetfeld befestigt ist, der Magnetfelder in zu der Drehachse der Welle rechtwinkligen Ebenen erfaßt.

6. Meßwertaufnahmegerät nach einem der vorhergehenden Ansprüche, dadurch gekennzeichnet, daß auf der Welle (54) ein dritter Meßwertaufnehmer (30) befestigt ist, der in Abhängigkeit von einem über das Meßwertaufnahmegerät strömenden Gasstrom eine Ausgangsspannung erzeugt, daß der dritte Meßwertaufnehmer im wesentlichen auf diejenige Komponente des Gasstroms anspricht, die in einer zu der Welle rechtwinkligen Ebene liegt, daß der dritte Meßwertaufnehmer (30) ein piezoelektrisches Kristall (73) enthält, und daß das Kristall die Gestalt einer an einem Ende der Welle einseitig eingespannten Platte aufweist und um eine zu der Welle rechtwinklige Achse biegbar ist, wobei die Ebene der Platte parallel zu der Achse der Welle verläuft.

7. Meßwertaufnahmegerät nach einem der vorhergehenden Ansprüche, dadurch gekennzeichnet, daß auf der Welle (54) ein Antriebsrad (41) befestigt ist, und daß pneumatische Antriebsmittel vorgesehen sind, die einen antreibenden Fluidstrom gegen das Antriebsrad richten.

8. Meßwertaufnahmegerät nach Anspruch 7, dadurch gekennzeichnet, daß das Antriebsrad zu der Welle (54) koaxiale Ausnehmungen (44) enthält, in denen der erste (79) und der zweite (77) Meßwertaufnehmer angeordnet sind.

**Revendications**

1. Dispositif détecteur piézoélectrique comprenant i) un premier détecteur (16, 79) monté sur un arbre (11, 54) et sensible à une vitesse angulaire de l'arbre autour d'un axe perpendiculaire à l'axe de rotation de l'arbre, le dispositif détecteur comprenant une branche (16) qui s'étend radialement depuis l'arbre et comporte un dispositif piézoélectrique (79) détecteur de contrainte agencé pour engendrer un signal de tension indicateur de la grandeur de la contrainte de flexion dans la branche et autour d'un axe de flexion perpendiculaire à l'axe de rotation de l'arbre et à la direction radiale suivant ladite branche, et ii) des contacts selectifs électriques (64) pour conduire hors de l'arbre des premiers signaux électriques de sortie provenant du premier dispositif détecteur (16, 79), caractérisé en ce que le dispositif comprend en outre iii) un second dispositif détecteur (14, 77) monté sur ledit arbre (11, 54) et sensible à une accélération linéaire de l'arbre dans une direction perpendiculaire à l'axe de rotation de l'arbre, les contacts selectifs électriques (64) conduisant hors de l'arbre également des seconds signaux électriques de sortie provenant du second dispositif détecteur, et en ce que le second dispositif détecteur comprend une branche (14) qui s'étend radialement depuis ledit arbre et est agencée de telle sorte que pendant ladite accélération elle subisse une contrainte qui est provoquée par l'effet d'inertie de sa masse et est proportionnelle à ladite accélération, et la branche dudit second dispositif détecteur comportant un dispositif piézoélectrique (77) détecteur de contrainte agencé pour détecter ladite contrainte et pour engendrer un signal de tension indicateur de la grandeur de ladite contrainte.

2. Dispositif détecteur suivant la revendication 1, caractérisé en ce que ledit premier dispositif détecteur (79) et ledit second dispositif détecteur (77) sont agencés dans une relation d'espacement axial le long dudit arbre (54).

3. Dispositif suivant l'une ou l'autre des revendications précédentes, caractérisé en ce que le dispositif détecteur piezoélectrique du second dispositif détecteur (77) est constitué par une paire de cristaux diamétralement opposés ayant des surface situées dans des plans parallèles à l'axe de l'arbre (54).

4. Dispositif suivant l'une quelconque des revendications précédentes, caractérisé par un dispositif (31) détecteur de champ électrique monté sur l'arbre (54) pour tourner avec l'arbre, pour détecter des champs électriques dans un plan perpendiculaire à l'axe de rotation de l'arbre.

5. Dispositif suivant l'une quelconque des revendications précédentes, caractérisé par un dispositif (32) détecteur de champ magnétique monté sur l'arbre (54) pour tourner avec l'arbre, pour détecter des champs magnétiques dans des plans perpendiculaires à l'axe de rotation de l'arbre.

6. Dispositif tel que revendiqué dans l'une quelconque des revendications précédentes, caractérisé par un troisième dispositif détecteur (30) monté sur ledit arbre (54) pour produire une tension de sortie en réponse à un écoulement de gaz sur ledit dispositif, ledit troisième dispositif détecteur étant principalement sensible à une composante dudit écoulement de gaz dans un plan normal audit arbre, ledit troisième dispositif détecteur comprenant un cristal piezoélectrique (73), ledit cristal étant constitué par une plaque en porte-à-faux à partir d'une extrémité dudit arbre et pouvant fléchir autour d'un axe perpendiculaire audit arbre, le plan de ladite plaque étant parallèle à l'axe dudit arbre.

7. Dispositif tel que revendiqué dans l'une quelconque des revendications précédentes, caractérisé par une roue (41) d'entrainement montée sur ledit arbre (54), et des moyens d'entrainement pneumatiques pour diriger un fluide moteur contre ladite roue d'entrainement.

8. Dispositif tel que revendiqué dans la revendication 7, caractérisé en ce que ladite roue d'entrainement comporte des cavités (44) agencées co-axialement avec ledit arbre (54) pour recevoir ledit premier dispositif détecteur (78) et ledit second dispositif détecteur (77).

0 040 191

FIG. 1

MAGNETIC FIELD

FIG. 2

ELECTRIC FIELD

FIG. 3

AIR FLOW

FIG. 4

'g' LINEAR ACCELERATION

FIG. 5

ANGULAR VELOCITY

FIG. 6A

FIG. 6B

FIG. 6C

FIG. 6D

FIG. 7A

FIG. 7B

FIG. 7C

FIG. 7D

FIG. 8

INDIVIDUAL CRISTAL OUTPUT

FIG. 9

RESULTANT OUTPUT

0 040 191

2

FIG. 10

FIG. 11

*86*

FIG. 12

*95*
*94*
*96*
*41*
*98* *93* *81* *40* *90* *91*
*37*

FIG. 13

*101*
*100*
*100*
*102*
*111*
*103*
*110*
*121*
*105*
*105*
*104*
*125*
*123*
*120*
*122*

4

FIG. 14